# EUROPÄISCHE PATENTSCHRIFT

(11) **EP 1 516 633 B1**
(45) Veröffentlichungstag und Bekanntmachung des Hinweises auf die Patenterteilung: **06.12.2006**
(21) Anmeldenummer: 03019048.2
(22) Anmeldetag: 22.08.2003
(51) Int. Cl.: A61L 9/03

(54) **Vorrichtung zum Verdampfen von flüchtigen Wirkstoffen, insbesondere von Duftstoffen und/oder Insektiziden**
Apparatus for evaporating volatile compounds, in particular perfumes and/or insecticides, heating device
Dispositif pour évaporer des composés volatiles, en particulier des agents parfumants et/ou des insecticides

(43) Veröffentlichungstag der Anmeldung: 23.03.2005
(73) Patentinhaber: C.T.R. Consultoria Tecnica e Representacoes, Lda., 2715-251 Almargem do Bispo (PT)
(72) Erfinder: Vieira Queiroz, Pedro, 2775-178 Parede (PT)
(74) Vertreter: Liebl, Thomas

(56) Entgegenhaltungen:
- EP-A- 0 636 314
- DE-A- 10 114 517
- US-A- 4 708 973
- US-A- 2002 166 853
- US-A1- 2003 049 025

## Beschreibung

Die Erfindung betrifft eine Vorrichtung zum Verdampfen von flüchtigen Wirkstoffen, insbesondere von Duftstoffen und/oder Insektiziden, nach dem Oberbegriff des Anspruchs 1.

Vorrichtungen zum Verdampfen von flüchtigen Wirkstoffen, insbesondere von Duftstoffen und/oder Insektiziden, sind allgemein bekannt. So ist beispielsweise aus der EP 1 195 169 A1 eine Verdampfungsvorrichtung bekannt, bei der in ein Gehäuse der Verdampfungsvorrichtung ein eine flüchtige, flüssige Substanz enthaltender Behälter eingesetzt wird. Dieser Behälter weist einen Docht auf, der die zu verdampfende Substanz mittels der Kapillarwirkung aus dem Behälter fördert, wobei das aus dem Behälter ragende Dochtende benachbart zu einer einen Keramikheizkörper aufweisenden Heizvorrichtung angeordnet ist, so dass die flüchtige Substanz durch die vom Keramikheizkörper abgestrahlte Wärme verdampft und über Lüftungsschlitze im Gehäuse in die Umgebung entweichen kann. Konkret ist hier der Heizkörper als Keramikheizkörper ausgebildet, in dem zur Erwärmung des Heizkörpers ein elektrisches Widerstandselement aufgenommen ist, das über elektrische Leitungen mit einem am Gehäuse angeordneten Anschlussstecker gekoppelt ist. Das Widerstandselement wird im Rahmen der Herstellung der Heizvorrichtung in eine am Keramikheizkörper ausgebildete Aussparung manuell eingelegt und anschließend dort mit einem eine hohe Wärmeleitfähigkeit aufweisenden Zement vergossen, um das Widerstandselement im Keramikheizkörper sicher zu fixieren. Auch dieses Ausgießen mit einem vorzugsweise flammenbeständigen Isolationszement erfolgt im Wesentlichen manuell, um die genaue Positionierung des Widerstandselementes zu gewährleisten.

Ein derartiger Keramikheizkörper in Verbindung mit einer Verdampfungsvorrichtung für flüssige Insektizide oder Parfüme ist auch aus der EP 0 451 331 A1, der EP 0 943 344 A1, der EP 0 962 132 A1 und der EP 1 108 358 A1 bekannt.

Aus der US 2002/0166853 A1 ist ein eine zylindrische Form und einen Hohlraum als Aufnahmeraum aufweisender Kunststoffkörper bekannt, der eine konzentrische Öffnung mit einem sich axial erstreckenden Halsbereich zur Aufnahme eines Dochtes aufweist. Dieser Kunststoffkörper weist ferner bezogen auf den Halsbereich voneinander um 180° beabstandete Rippen auf, die Vertiefungen bzw. Nuten zur Aufnahme von elektrischen Widerstandselementen aufweisen. Zwischen den beiden Rippen des Kunststoffkörpers sind voneinander sowie von den Rippen beabstandete Vorsprünge mit kreuzweise angeordneten Kanälen angeordnet, mittels denen die Enden der von den elektrischen Widerstandselementen kommenden Leitungen fixiert werden können. Dazu wird in die kreuzweise angeordneten Kanäle jedes Vorsprungs jeweils ein Clip aus einem leitfähigen Material eingeclipst. Der Kunststoffkörper selbst kann dann mit einem Deckel verschlossen werden. Auch ein derartiger Aufbau einer Heizvorrichtung ist relativ bauteilintensiv und damit teuer und aufwendig in der Herstellung.

Aus der US 2003/0049025 A1 ist ferner ein flacher Wirkstoffchip bekannt, bei dem das elektrische Heizelement in den den Chip wenigstens zum Teil ausbildenden Wirkstoff selbst integriert wird.

Aufgabe der Erfindung ist es, eine Heizvorrichtung für eine, in ein Gehäuse einsetzbaren Behälter mit Docht aufweisende Vorrichtung zum Verdampfen von flüchtigen Wirkstoffen zu schaffen, die einfach und preiswert aufgebaut ist und mit der auf funktionssichere Art und Weise eine erforderliche Verdampfungstemperatur im Bereich des Dochtes erzielt werden kann.

Diese Aufgabe wird gelöst mit den Merkmalen des Anspruchs 1. Vorteilhafte Ausgestaltungen sind Gegenstand der Unteransprüche.

Ein derartiger, insbesondere blockartiger Kunststoff-Heizkörper, in den während des Herstellvorgangs des Heizkörpers gleichzeitig die elektrischen Heizelemente eingebettet bzw. eingegossen werden, ermöglicht einen insgesamt einfachen und preiswerten Aufbau einer Heizvorrichtung und damit einer Vorrichtung zum Verdampfen von flüchtigen Wirkstoffen insgesamt. Ein derartiger Kunststoff-Heizkörper kann auf einfache Weise weitestgehend automatisiert, z. B. im Kunststoff-Spritzgussverfahren hergestellt werden. D. h., dass durch die Automatisierung des Herstellvorgangs zahlreiche zeitaufwendige und produktionstechnisch sowie fertigungstechnisch aufwendige Bearbeitungsschritte bei der Herstellung der Verdampfungsvorrichtung eingespart werden können. Des weiteren ist durch das Einbetten der elektrischen Heizelemente in den Kunststoff-Heizkörper eine sehr effiziente Wärmeleitung zum Docht hin möglich, was sich positiv auf die Bereitstellung der gewünschten Verdampfungsleistung auswirkt.

Vorteilhaft ist der Kunststoff-Heizkörper nach Anspruch 2 im wesentlichen aus einem Thermoplast als Kunststoffmaterial hergestellt. Bevorzugt handelt es sich hierbei um ein teilkristallines Thermoplast, vorzugsweise ein Polyamid. Besonders gute Heizergebnisse lassen sich mit einem Polyamid des Typs PA 6.6 erzielen. Besonders bevorzugt ist nach Anspruch 3 eine Ausführungsform, bei der der Kunststoff-Heizkörper mit Fasern, vorzugsweise mit Glasfasern, verstärkt ist. Dadurch lassen sich vorteilhaft die mechanischen Eigenschaften des Kunststoff-Heizkörpers verbessern. Ebenso können in den Kunststoff-Heizkörper auch noch Komponenten eingebracht werden, mit denen eine Wärmeverteilung möglich ist.

Grundsätzlich kann jedes elektrisches Heizelement verwendet werden, z. B. eine Heizwendel oder, wie mit Anspruch 4 beansprucht, ein elektrisches Widerstandselement, z. B. ein PTC-Widerstandselement. Besonders bevorzugt ist jedoch die Verwendung eines elektrischen Widerstandselementes, wie es mit den Ansprüchen 5 und 6 beansprucht ist. Ein derartiges Widerstandselement trägt in Verbindung mit einem Kunststoff-Heizkörper ebenfalls zu einem relativ kleinbauenden Aufbau bei, wobei es ein weiterer besonderer Vorteil eines derartigen Aufbaus des Widerstandselementes ist, dass die Verdampfungstemperatur durch das Einschneiden und/oder Einschleifen optimal auf die Zusammensetzung der jeweils zu verdampfenden Substanz abgestimmt werden kann. Dadurch kann z. B. vorteilhaft die Gefahr der Entflammbarkeit der Vorrichtung insgesamt oder bestimmter Bauteile reduziert werden.

In einer nach Anspruch 7 besonders bevorzugten Ausführungsform ist die Widerstandsschicht eine Metalloxidschicht, vorzugsweise eine Nickel-Chrom-Legierungsschicht. Zusätzlich dazu kann der Widerstandskörper aus Keramik hergestellt sein, vorzugsweise mit einem hohen Gehalt an Al₂O₃ (Aluminiumoxid), wodurch eine besonders gute Wärmeleitfähigkeit des Widerstandskörpers und damit des Widerstandselementes insgesamt erreicht werden.

Ein kompakter Aufbau ergibt sich mit den Merkmalen des Anspruchs 8.

Nach Anspruch 9 ist im Kunststoff-Heizkörper eine Dochtaussparung vorgesehen, in die das Dochtende hineinragt. Beispielsweise kann diese Dochtaussparung als Durchgangsloch ausgebildet sein oder aber auch als eine randseitig z. B. senkrecht durchgehende Einbuchtung.

Für eine gezielte Wärmeleitung zu bestimmten Bereichen des Kunststoff-Heizkörpers hin kann nach Anspruch 10 vorgesehen sein, dass der Kunststoff-Heizkörper an einem Außenflächenbereich wenigstens bereichsweise mit einem wärmeleitfähigen Metallelement versehen ist. Besonders bevorzugt ist hierbei nach Anspruch 11 vorgesehen, dass die Dochtaussparung mit einem derartigen Metallelement ausgekleidet ist. Sehr gute Ergebnisse mit einer sehr guten Konzentration der Wärme um einen in ein Durchgangsloch des Kunststoff-Heizkörpers hineinragenden Docht eines Behälters werden erzielt, wenn in dieses Durchgangsloch ein Metallring eingesetzt ist. Ein derartiges Metallelement, z. B. ein Metallring, kann z. B. nachträglich nach der Herstellung des Kunststoff-Heizkörpers eingesetzt bzw. angebracht werden. Ebenso gut ist dieses Metallelement bzw. der Metallring aber auch im Rahmen der Herstellung des Kunststoff-Heizkörpers mit eingießbar.

Die Erfindung wird nachfolgend anhand einer Zeichnung näher erläutert.

Es zeigen:
- Fig. 1: eine schematische Draufsicht auf einen erfindungsgemäßen Kunststoff-Heizkörper, in den ein elektrisches Widerstandselement eingegossen ist,
- Fig. 2: eine schematische Rückansicht des Kunststoff-Heizkörpers der Fig. 1,
- Fig. 3: eine vergrößerte Darstellung des in den Kunststoff-Heizkörper der Fig. 1 und 2 eingegossenen elektrischen Widerstandselementes,
- Fig. 4: eine schematische, perspektivische Darstellung einer Verdampfungsvorrichtung zum Verdampfen von flüchtigen Wirkstoffen, mit darin eingesetztem erfindungsgemäßen Kunststoff-Heizkörper, und
- Fig. 5: eine schematische Draufsicht auf den in der Fig. 1 dargestellten erfindungsgemäßen Kunststoff-Heizkörper mit in das Durchgangsloch eingesetztem Metallring.

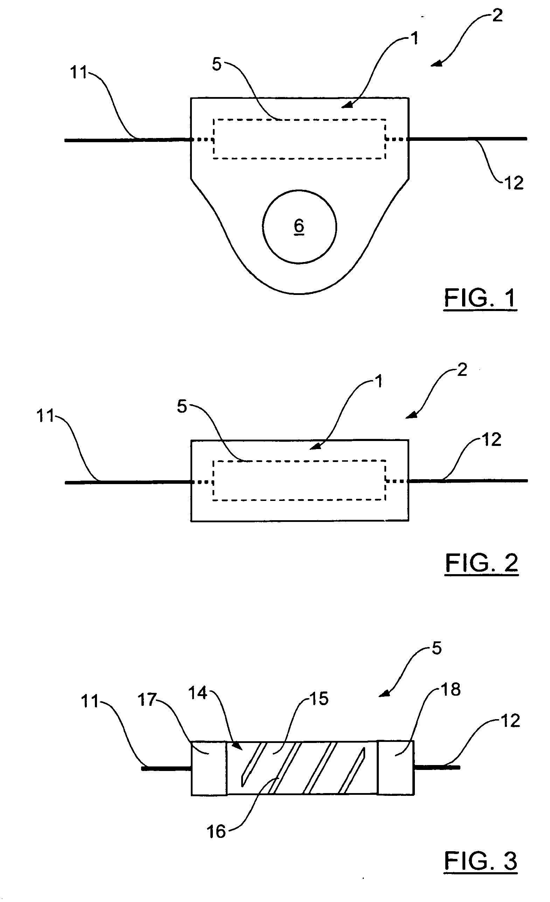

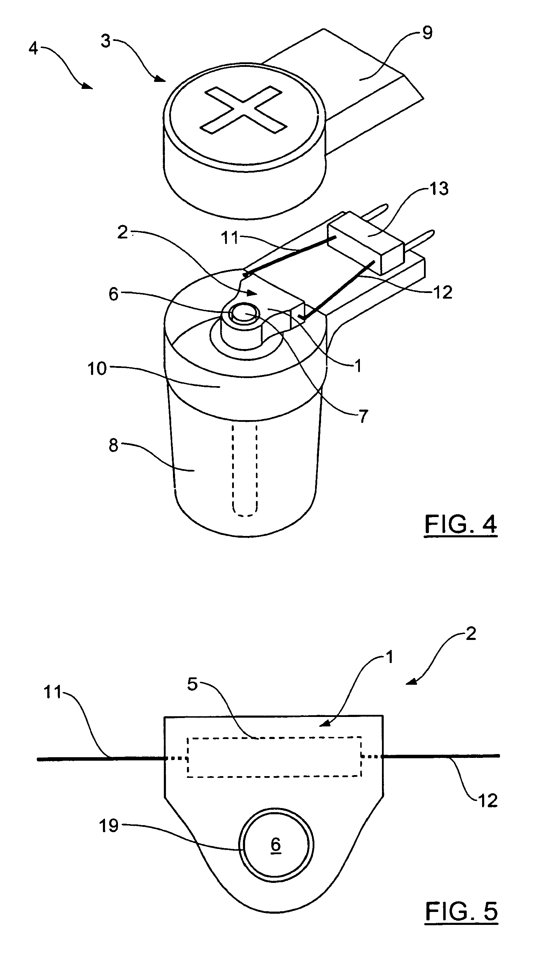

In der Fig. 1 ist schematisch eine Draufsicht auf einen erfindungsgemäßen blockartig ausgebildeten Kunststoff-Heizkörper 1 gezeigt, der als Bestandteil einer Heizvorrichtung 2 in ein Gehäuse 3 einer Verdampfungsvorrichtung 1 einsetzbar ist, wie dies schematisch der Fig. 4 zu entnehmen ist.

Der Kunststoff-Heizkörper 1 ist hier, wie dies insbesondere der Rückansicht der Fig. 2 zu entnehmen ist, flachbauend ausgebildet. Ferner weist der Kunststoff-Heizkörper 1 in einem Bereich benachbart zu einem in den Kunststoff-Heizkörper 1 eingegossenen elektrischen Widerstandselement 5 ein Durchgangsloch 6 für einen Docht 7 auf, wie dies der Fig. 1 in Verbindung mit der Fig. 4 zu entnehmen ist. Dieser Docht 7 ist Bestandteil eines Behälters 8, in dem eine zu verdampfende flüssige Substanz aufgenommen ist. Der Docht 7 ist dabei so in den Behälter 8 eingesetzt, dass der Docht 7 mit einem Dochtende in das Durchgangsloch 6 des im Gehäuse 3 der Verdampfungsvorrichtung 4 angeordneten Kunststoff-Heizkörpers 1 ragt.

Das Gehäuse 3 ist hier beispielhaft zweiteilig aus einer Gehäuseoberschale 9 und einer Gehäuseunterschale 10 aufgebaut, die im hier nicht dargestellten und montierten Zustand zum einen die Heizvorrichtung 2 und damit den Kunststoff-Heizkörper 1 und zum anderen einen mit elektrischen Anschlussleitungen 11, 12 des Widerstandselementes 5 verbundenen Anschlussstecker 13 zwischen sich verklemmen.

Das in den Kunststoff-Heizkörper 1 eingegossene Widerstandselement 5 ist, wie dies der Fig. 3 zu entnehmen ist, durch einen stabförmigen Widerstandskörper 14 gebildet, der mit einer Widerstandsschicht 15 beschichtet ist. Diese Widerstandsschicht ist zur Einstellung eines bestimmten Widerstandswertes - entsprechend einer auf die Zusammensetzung der zu verdampfenden, in dem Behälter 8 aufgenommenen Substanz abgestimmten Verdampfungstemperatur - hier beispielhaft mit einem Spiralschnitt 16, z. B. durch Laserspiralschneiden spiralförmig eingeschnitten. Die Widerstandsschicht 15 ist beispielsweise eine Metalloxidschicht, während der Widerstandskörper selbst aus einer Keramik hergestellt ist, die einen hohen Gehalt an Al₂O₃ aufweist. Auf die Enden des beschichteten stabförmigen Widerstandskörpers 14 sind jeweils Metallkappen 17, 18 aufgesetzt, an denen die elektrischen Anschlussleitungen 11, 12 z. B. angeschweißt sind.

Dieses so ausgebildete elektrische Widerstandselement 5 wird zur Herstellung der Heizvorrichtung 2 in einem ersten Verfahrensschritt in eine hier nicht dargestellte Gießform bzw. ein entsprechendes Werkzeug einer Spritzgussmaschine eingebracht und dort positioniert. Anschließend wird in einem darauffolgenden Verfahrensschritt bei geschlossener Gießform bzw. Werkzeug ein wärmeleitfähiges Kunststoffmaterial, z. B. ein glasfaserverstärktes Polyamid, z. B. PA 6.6, in die Gießform eingebracht, um das elektrische Widerstandselement 5 mit einem Kunststoff-Heizkörper 1 zu umgießen. Das Widerstandselement 5 wird dabei so umgossen, dass nach Fertigstellung der Heizvorrichtung 2 die elektrischen Anschlussleitungen 11, 12 aus dem Kunststoff-Heizkörper 1 ragen, wie dies in den Fig. 1 und 2 schematisch dargestellt ist. Als Herstellungsverfahren eignet sich hier insbesondere ein Spritzgussverfahren, wobei zudem zur Automatisierung dieses Herstellungsverfahrens vorgesehen ist, dass das Widerstandselement 5 mittels einer Robotereinrichtung in die Gießform eingebracht und dort positioniert wird. Ebenso soll nach dem Gießvorgang der fertig gegossene Kunststoff-Heizkörper 1 mittels derselben oder aber auch einer anderen Robotereinrichtung aus der geöffneten Gießform zur weiteren Verwendung entnommen werden.

In der Fig. 5 ist schließlich eine alternative Ausführungsform gezeigt, bei der ein Metallring 19 im Anschluss an die Herstellung des Kunststoff-Heizkörpers 1 in das Durchgangsloch 6 des Kunststoff-Heizkörpers 1 eingebracht, z. B. eingepresst ist. Dadurch wird eine bevorzugte Konzentrierung der Wärmeleitung zum Docht hin erzielt, was die Verdampfungsleistung des Kunststoff-Heizkörpers 1 und damit der Heizvorrichtung 2 nochmals wesentlich erhöht.

## Patentansprüche

1. Vorrichtung zum Verdampfen von flüchtigen Wirkstoffen, insbesondere von Duftstoffen und/oder Insektiziden,
mit einem Gehäuse (3), das mit einem Behälter (8) für eine zu verdampfende Substanz verbunden ist, wobei in den Behälter (8) ein Docht (7) eingesetzt ist, der (8) zur Verdampfung der sich im Behälter (8) befindlichen Substanz mit einem aus dem Behälter (8) ragenden Dochtende einer in dem Gehäuse (3) angeordneten Heizvorrichtung (2) zugeordnet ist,
wobei die Heizvorrichtung wenigstens einen als Kunststoff-Heizkörper (1) aus einem wärmeleitfähigen Kunststoffmaterial ausgebildeten Heizkörper aufweist, in den wenigstens ein elektrisches Heizelement (5) eingebettet ist, so dass der Kunststoff-Heizkörper (1) zur Verdampfung des über den Docht (7) in das Gehäuse (3) einbringbaren Wirkstoffes mittels des wenigstens einen elektrischen Heizelementes (5) auf wenigstens eine Verdampfungstemperatur aufheizbar ist, **dadurch ge**k**ennzeichnet, dass** das Heizelement (5) durch wenigstens teilweises Umgießen mit dem wärmeleitfähigen Kunststoffmaterial in den Heizkörper eingebettet ist.

2. Vorrichtung nach Anspruch 1, **dadurch gekennzeichnet**, das der Kunststoff-Heizkörper aus einem Thermoplast als Kunststoffmaterial hergestellt ist, bevorzugt aus einem Polyamid, höchst bevorzugt aus einem Polyamid des Typs PA 6.6.

3. Vorrichtung nach Anspruch 1 oder Anspruch 2, **dadurch gekennzeichnet, dass** der Kunststoff-Heizkörper (1) mit Fasern verstärkt ist.

4. Vorrichtung nach einem der Ansprüche 1 bis 3, **dadurch gekennzeichnet, dass** das elektrische Heizelement ein elektrisches Widerstandselement (5) ist.

5. Vorrichtung nach Anspruch 4, **dadurch gekennzeichnet, dass** das elektrische Widerstandselement (5) einen stabförmigen Widerstandskörper (14) aufweist, der wenigstens bereichsweise mit einer Widerstandsschicht (15) beschichtet ist, die zur Einstellung eines bestimmten Widerstandswertes entsprechend einer auf die Zusammensetzung des jeweils zu verdampfenden Wirkstoffes abgestimmten Verdampfungstemperatur bereichsweise eingeschnitten und/oder bereichsweise eingeschliffen ist.

6. Vorrichtung nach Anspruch 5, **dadurch gekennzeichnet, dass** die Widerstandsschicht (15) um den stabförmigen, vorzugsweise zylinderförmigen Widerstandskörper (14) herum spiralförmig mit einem Spiralschnitt (16) eingeschnitten ist.

7. Vorrichtung nach Anspruch 5 oder Anspruch 6, **dadurch gekennzeichnet,**
**dass** die Widerstandsschicht (15) eine Metalloxidschicht,
**dass** der Widerstandskörper (14) aus Keramik hergestellt ist,
**dass** auf die Enden des beschichteten, stabförmigen Widerstandskörpers (14) jeweils Metallkappen (17, 18) aufgesetzt sind, und
**dass** an diesen Kappen (17, 18) jeweils eine elektrische Leitung (11, 12) angebracht, ist, die mit einem Anschlussstecker (13) gekoppelt sind.

8. Vorrichtung nach einem der Ansprüche 1 bis 7, **dadurch gekennzeichnet, dass** der Kunststoff-Heizkörper (1) wenigstens zum Teil blockartig ausgebildet ist mit an gegenüberliegenden Heizkörperbereichen aus diesen ragenden elektrischen Leitungen (11, 12).

9. Vorrichtung nach einem der Ansprüche 1 bis 8, **dadurch gekennzeichnet, dass** im Kunststoff-Heizkörper (1) eine Dochtaussparung (6) ausgebildet ist, in die der Docht (7) mit einem Dochtende hineinragt.

10. Vorrichtung nach einem der Ansprüche 1 bis 9, **dadurch gekennzeichnet, dass** der Kunststoff-Heizkörper an einem Außenflächenbereich wenigstens bereichsweise mit einem wärmeleitfähigen Metallelement (19) versehen ist.

11. Vorrichtung nach einem der Ansprüche 1 bis 10, **dadurch gekennzeichnet, dass** die Dochtaussparung mit dem Metallelement (19) ausgekleidet ist.

## Claims

1. Apparatus for evaporating volatile compounds, in particular perfumes and/or insecticides,
having a housing (3), which is connected to a container (8) for a substance that is to be evaporated, a wick (7), which to evaporate the substance located in the container (8) has an end which projects out of the container (8) and is assigned to a heating apparatus (2) arranged in the housing (3), being inserted into the container (8),
the heating apparatus having at least one heating body which is formed as a plastic heating body (1) from a thermally conductive plastics material and in which at least one electrical heating element (5) is embedded, so that the plastic heating body (1), in order to evaporate the compound which can be introduced into the housing (3) via the wick (7) can be heated to at least an evaporation temperature by means of the at least one electrical heating element (5), **characterized in that** the heating element (5) is embedded in the heating body by at least partially moulding the thermally conductive plastics material around it.

2. Apparatus according to Claim 1, **characterized in that** the plastic heating body is made from a thermoplastic as the plastics material, preferably from a polyamide, most preferably from a polyamide of type PA 6.6.

3. Apparatus according to Claim 1 or Claim 2, **characterized in that** the plastic heating body (1) is reinforced with fibres.

4. Apparatus according to one of Claims 1 to 3, **characterized in that** the electrical heating element is an electrical resistor element (5).

5. Apparatus according to Claim 4, **characterized in that** the electrical resistor element (5) has a web-shaped resistor body (14) which, at least in regions, is coated with a resistor layer (15) which to set a specific resistance corresponding to an evaporation temperature matched to the composition of the compound that is in each case to be evaporated, is in regions cut and/or ground into.

6. Apparatus according to Claim 5, **characterized in that** the resistor layer (15) has a spiral incision (16) cut into it in a spiral shape around the rod-shaped, preferably cylindrical resistor body (14).

7. Apparatus according to Claim 5 or Claim 6, **characterized**
**in that** the resistor layer (15) is a metal oxide layer,
**in that** the resistor body (14) is made from ceramic,
**in that** metal caps (17, 18) are in each case fitted onto the ends of the coated, rod-shaped resistor body (14), and
**in that** an electrical line (11, 12) is attached to each of these caps (17, 18), said electrical lines being coupled to a connector terminal (13).

8. Apparatus according to one of Claims 1 to 7, **characterized in that** the plastic heating body (1) is at least partially of block-like design, with electrical lines (11, 12) which project out of opposite heating body regions.

9. Apparatus according to one of Claims 1 to 8, **characterized in that** a wick cut-out (6), into which an end of the wick (7) projects, is formed in the plastic heating body (1).

10. Apparatus according to one of Claims 1 to 9, **characterized in that** the plastic heating body, at least in regions, is provided with a thermally conductive metal element (19) on an outer surface region.

11. Apparatus according to one of Claims 1 to 10, **characterized in that** the wick cut-out is lined with the metal element (19).

## Revendications

1. Procédé pour évaporer des agents actifs volatils, en particulier des matières parfumantes et/ou des insecticides,
avec un boîtier (3) qui est relié à un récipient (8) destiné à une substance à évaporer, une mèche étant installée dans le récipient (8), laquelle est associée pour évaporer la substance qui se trouve dans le récipient (8) avec une extrémité de mèche dépassant du récipient (8) d'un dispositif de chauffage (2) agencé dans le boîtier (3),
le dispositif de chauffage présentant au moins un corps chauffant constitué d'une matière plastique thermoconductrice en tant que corps chauffant en matière plastique (1), dans lequel est enrobé au moins un élément chauffant (5) électrique de manière à ce que le corps chauffant (1) en matière plastique puisse être chauffé pour évaporer l'agent actif pouvant être introduit dans le boîtier (3) par l'intermédiaire de la mèche (7) au moyen du au moins un élément chauffant (5) électrique à au moins une température d'évaporation, **caractérisé en ce que** l'élément chauffant (5) est enrobé dans le corps chauffant par au moins un entourage partiel avec la matière plastique thermoconductrice.

2. Dispositif selon la revendication 1, **caractérisé en ce que** le corps chauffant en matière plastique est fabriqué à partir d'une matière thermoplastique en tant que matière plastique, de préférence à partir d'un polyamide et de manière préférée entre toutes à partir d'un polyamide du type PA 6.6.

3. Dispositif selon la revendication 1 ou la revendication 2, **caractérisé en ce que** le corps chauffant (1) en matière plastique est renforcé de fibres.

4. Dispositif selon l'une des revendications 1 à 3, **caractérisé en ce que** l'élément chauffant électrique est un élément de résistance (5) électrique.

5. Dispositif selon la revendication 4, **caractérisé en ce que** l'élément de résistance (5) électrique présente un corps de résistance (14) en forme de bâtonnet qui est recouvert au moins par endroits d'une couche résistive (15) qui est incisée par endroits et/ou qui est abrasée par endroits pour régler une valeur de la résistance déterminée selon une température d'évaporation ajustée sur la composition de l'agent actif à évaporer selon le cas.

6. Dispositif selon la revendication 5, **caractérisé en ce que** la couche résistive (15) est incisée en spirale, avec une coupe en spirale (16), autour du corps de résistance (14) en forme de bâtonnet, de préférence en forme de cylindre.

7. Dispositif selon la revendication 5 ou la revendication 6, **caractérisé en ce**
**que** la couche résistive (15) est une couche d'oxyde métallique,
en ce que le corps de résistance (14) est fabriqué en céramique,
en ce que des caches métalliques (17, 18) sont posés sur les extrémités du corps de résistance (14) en forme de bâtonnet recouvert et
en ce que sur ces caches (17, 18) est fixé respectivement un fil électrique (11, 12) qui est couplé à une fiche de raccordement (13).

8. Dispositif selon l'une quelconque des revendications 1 à 7, **caractérisé en ce que** le corps chauffant (1) en matière plastique est formé au moins partiellement en bloc avec des fils électriques (11, 12) sur les zones du corps de chauffage opposées qui dépassent de celles-ci.

9. Dispositif selon l'une quelconque des revendications 1 à 8, **caractérisé en ce qu'**un évidement (6) pour la mèche est formé dans le corps chauffant (1) en matière plastique, évidement dans lequel la mèche (7) rentre par l'une de ses extrémités.

10. Dispositif selon l'une quelconque des revendications 1 à 9, **caractérisé en ce que** le corps chauffant en matière plastique est doté sur une zone de surface extérieure, au moins par endroits, d'un élément métallique (19) thermoconducteur.

11. Dispositif selon l'une quelconque des revendications 1 à 10, **caractérisé en ce que** l'évidement pour la mèche est revêtu de l'élément métallique (19).
